# EUROPÄISCHE PATENTANMELDUNG

(11) **EP 2 332 816 A1**
(43) Veröffentlichungstag der Anmeldung: **15.06.2011**
(21) Anmeldenummer: 10014858.4
(22) Anmeldetag: 23.11.2010
(51) Int. Cl.: B62K 21/02, B62K 25/04

(54) **Fahrradgabel**

(30) Priorität: 27.11.2009 DE 202009016183 U
(71) Anmelder: Mertin, Thomas, 24791 Alt Duvenstedt (DE)
(72) Erfinder: Mertin, Thomas, 24791 Alt Duvenstedt (DE)
(74) Vertreter: Biehl, Christian

(57) **Zusammenfassung**

Fahrradgabel (10) mit einem Gabelschaft (20) und zwei mit dem Gabelschaft (20) verbundenen, die Radachse tragenden Gabelscheiden (30, 32), wobei die Gabelscheiden (30, 32) entlang ihrer Längserstreckung im Bereich ihrer Mitte geteilt aus zwei Abschnitten ausgebildet sind, von denen einer (30; 32) fest mit dem Gabelschaft (20) verbunden ist und wenigstens ein zweiter (32; 30) mit jeweils einer Laufradachsenaufnahme (50) auf jeder Seite der Radachse versehen ist, und wobei die beiden Abschnitte durch eine Mehrzahl von wenigstens drei die Teilung überbrückenden Plattenelementen (40) miteinander verbunden sind.

## Beschreibung

Die Erfindung betrifft eine Fahrradgabel nach dem Oberbegriff des Hauptanspruches, insbesondere eine solche mit Federung zur Dämpfung von durch unebene Strassen verursachten Stößen.

Stoßdämpfer für Fahrräder sind im Stand der Technik meist mit einer Hydraulik oder mit Spiralfedern vorgesehen, die in Längsrichtung wirkende Kräfte auffangen. Beispiele sind in den deutschen Gebrauchsmustern DE ― U1 299 24 552 und DE U1 - 94 09 592 dargestellt.

Dass Fahrräder insbesondere auch an ihrer Vorderradgabel wünschcnswerterweise Stöße auffangen, ist bereits seit der Patentschrift DE 71 062 aus dem Jahre 1892 bekannt. Während dort jedoch doppelarmige Hebel in aufwendiger mechanischer Weise die Federungen vornehmen sollen, ist es bei heutigen Fahrrädern besondere wünschenswert, dass die Federung verhindert, dass das Laufrad in den Federschwingen seitlich wegkippt. Dieses Wegkippen erzeugt bei marktüblichen Federgabeln zur Zeit ein schwammiges Lenkverhalten.

Insbesondere für den Fall, dass gebremst wird, während gelenkt wird, ergeben sich mit den marktübliche Vorrichtungen unerwünschte Momente, die vom Fahrer durch Gewichtsverlagerung ausgeglichen werden müssen.

Zudem sind bisher bekannte Federsysteme recht gewichtsträchtig und benötigen nicht unerheblich Wartung.

Schließlich sind bisherige Federungen dadurch problematisch, dass sie nur in einer, der Gabelscheiden- oder Schaftrohr-Richtung federn, nicht jedoch Stöße, die in einer anderen Richtung (also nicht axial) eingeleitet werden, dämpfen bzw. wegfedern können.

Erfindungsgemäß werden die Probleme durch eine wie nachfolgend vorgeschlagene Federgabel gelöst. Es wird dabei nun eine Federung realisiert, die die oben genannten Randbedingungen erfüllt und dennoch eine gute Lenkung - ohne einen schwammigen Eindruck - bietet.

Vorteilhaft ist dabei insbesondere, dass zwei Abschnitte der Gabelscheiden realisiert werden, die nur über ein Dämpfungselement miteinander verbunden sind, wobei der eine Abschnitt die Laufradaufnahme an seinem unteren Ende aufweist und der andere Abschnitt an seinem oberen Ende mit dem Schaftrohr verbunden ist.

Diese Gabelscheidenabschnitte können +einzeln oder ggf. auch beide U-förmig ausgebildet sein, um das Rad zu umgreifen und dadurch eine gewünschte Stabilität zu erreichen. Zwischen diesen beiden Abschnitten werden mindestens zwei Platten, bevorzugt aber 20 bis 31 solcher Platten z.B. aus Karbonmaterial vorgesehen, welche sich bei Belastung des Bogens über die Ausfallenden (durch das Laufrad) bewegen können und somit eine federnde Wirkung auf das Gesamtsystem haben.

Zusätzlich können zwischen den sich relativ zueinander bewegenden Plattenelementen Dämpfungselemente, beispielsweise aus Polyurethanschaum oder dgl. vorgesehen werden, die das System dämpfen.

Wenn die durch ihrer Eigensteifigkeit gering biegsamen oder sogar gelenkig an den Gabelscheiden gelagerten Platten durch dünne, aber mit den Gabelscheiden und dem Bogen fest verbundene Platten ersetzt werden, die z. B. aus Faserverbundstoff bestehen, kann das System auch ohne Dämpfer eine genügende Materialdämpfung in den Faserverbundplatten bieten.

Durch eine derartige neuartige Federgabel wird ein System geschaffen, das eine hohe Seitensteifigkeit bei geringem Gewicht bietet und bei der ein Laufrad - auch bei Bremsen während Kurvenfahrt - nicht mehr seitlich wegkippen kann.

Da lediglich die Elastizität des Plattenmaterials eingesetzt wird, ergibt sich ein praktisch wartungsfreier und deutlich einfacherer Aufbau.

Durch entsprechend den auftretenden Stößen gewählte Anpassung der Plattenelemente können die Federungen in ihrer Konstruktion nahezu an jeden Anwendungsfall eingepasst werden. Insbesondere kann zunächst das starke Einfedern beim Bremsen dadurch kompensiert werden, dass ein leicht geschwungener Einbau der Dämpfungselemente gewählt wird, der diese annähernd horizontal anordnet.

Weitere Vorteile und Merkmale der Erfindung ergeben sich aus nachfolgender Beschreibung eines bevorzugten Ausftihrungsbeispiels anhand der beigefügten Zeichnung. Dabei zeigt:
Fig. 1 eine perspektivische Darstellung eines ersten Ausführungsbeispiels der Erfindung, bei der ein erster U-förmiger Abschnitt - der rechte und linke Gabelscheiden mit dem Schaftrohr verbindet - im Vordergrund dargestellt ist und ein zweiter aus zwei U-formig miteinander verbundenen Schenkel bestehender Gabelscheidenabschnitt im Hintergrund mit am unteren Ende offenen Laufrad(achs)aufnahmen zu erkennen ist
Fig. 2 eine Schnittdarstellung durch eine Fahrradgabel gemäß Fig. 1, wobei die Anordnung von im wesentlichen vertikal stehenden Platten 44 deutlich wird,
Fig. 3 eine zweite Ausführungsform der Erfindung, in der der die Gabelscheiden mit dem Schaftrohr 20 verbindende erste Abschnitt hinter einem U-förmig ausgebildeten, mit Laufradaufnahmen versehenen zweiten Abschnitt angeordnet ist, wobei das Dämpfungselement 40 aus annähernd horizontal angeordneten Platten aufgebaut ist,
Fig. 4 eine schematische Darstellung, wie eine Platte mit einer Achse in zwei Aschsaufnahmen an einer Gabelscheide befestigt werden kann, und
Fig. 5 ein Bauteil dass einstückig eine Mehrzahl von Platten mit Verklebflächen zur Anbindung an die Gabelscheiden kombiniert.

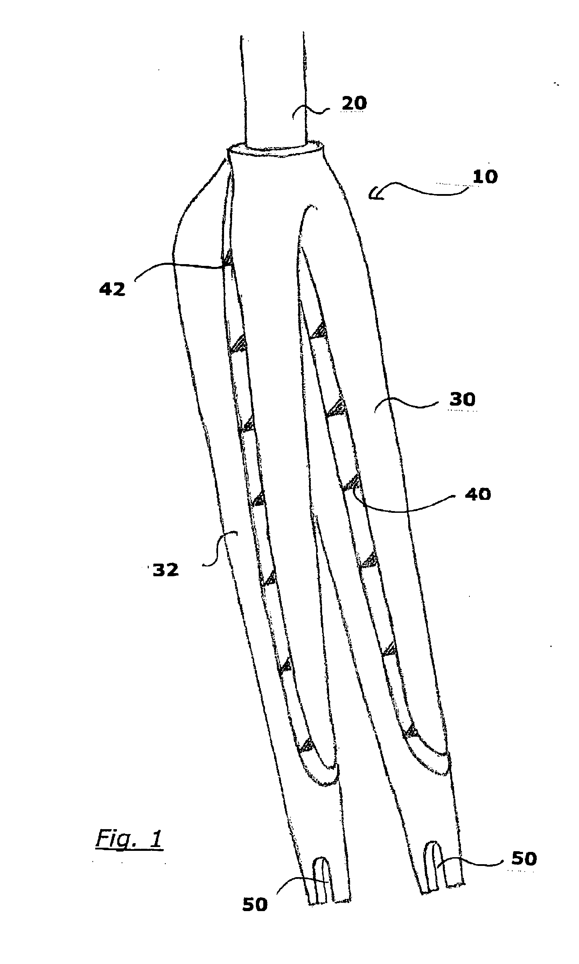

Die in der Fig. 1 als aus Platten aufgebautes Dämpfungselement dargestellte Zwischenschicht zwischen dem ersten und zweiten Abschnitt der Gabelscheiden kann in einer vereinfachten Ausführung auch als Polyurethanschicht realisiert werden. Vorteilhafter ist jedoch, wenn man ein Karbonmaterial in Plattenform derart an die Gabelscheiden ansetzt, dass es im Faserverbund eine Dämpfungsfunktion aufweist.

Es ist also darauf zu achten, dass die Ausrichtung der plattenförmigen Elemente die Aufnahme von Stößen bzw. die Dämpfung von in unterschiedlichen Richtungen auf die Gabel ausgeübten Stößen ganz wesentlich beeinflusst.

Bei Stößen, die beim normalen Gebrauch, beim Fahrradfahren, erfolgen, werden kleine Steine oder dergleichen im wesentlichen senkrechte Stöße ausüben, die annähernd in Gabelrichtung verlaufen.

Beim Bremsen wird sich jedoch die Masse des Fahrers, abgestützt auf dem Lenker, besonders nach vorne bewegen, was eine im wesentlichen quer zur Federgabel verlaufende Kraftkomponente bewirkt.

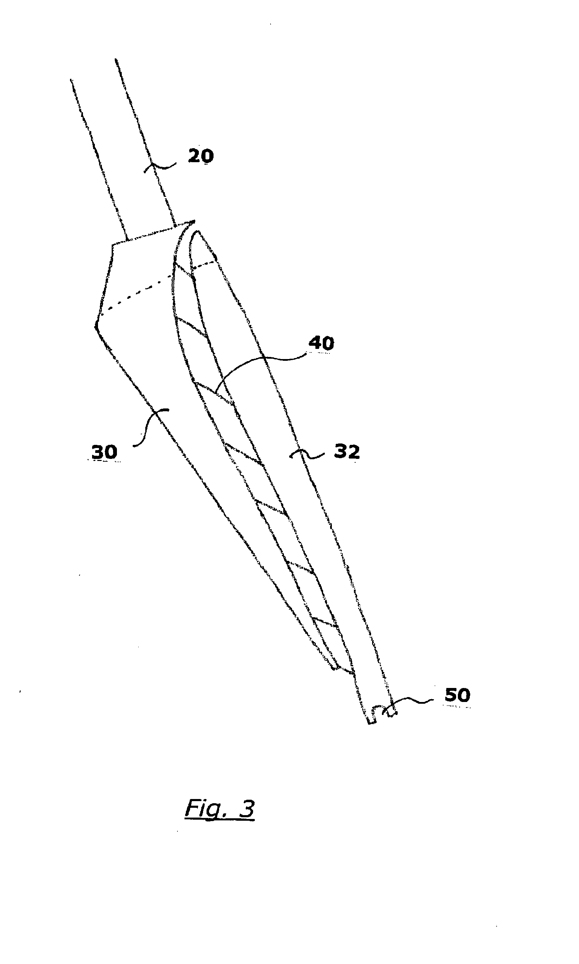

Dieser Kraftkomponente ist starr entgegenzuwirken, während den Stößen durch die Fahrbahn möglichst weich entgegenzuwirken ist. Dies lässt sich durch die Anordnung von im wesentlichen horizontalen starren Platten, wie in der Fig. 3 angedeutet, erreichen, in der die kleinen Stöße der Fahrbahn in Querrichtung der Platten in der Aufhängung der Platten, d. h., im wesentlichen in der Verklebung dieser aufgefangen werden, während die Platten selber in ihrer Steifigkeit die Bremsbeschleunigungen relativ starr weiterleiten.

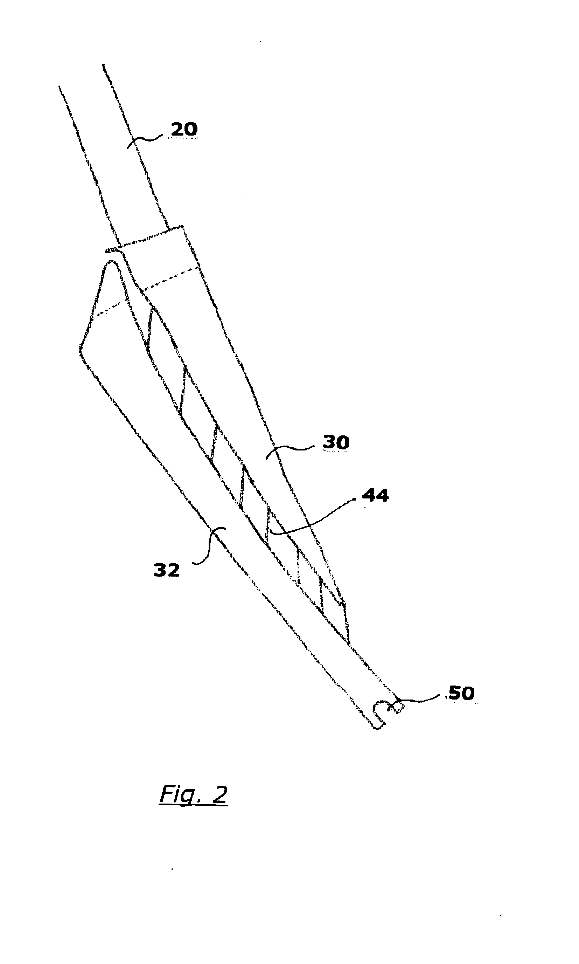

Je nach Fasermaterial kann es jedoch auch insbesondere dann, wenn dort noch Dämpfungselemente angeordnet werden, sinnvoll sein die in der Fig. 2 angeordnet im wesentlichen vertikale Anordnung der Platten zu wählen, da dann gegenüber den Vertikalstößen das weichere Material voll zur Verfügung steht, wobei allerdings gegenüber Bremsbeschleunigung dieses Materials auf Zug bzw. Biegung nicht auf Druck belastet wird.

Die erfindungsgemäße Fahrradgabel 10 mit einem Gabelschaft 20 und zwei mit dem Gabelschaft 20 verbundenen Gabelscheiden 30, 32 kann aber auch in einer einfachsten Ausführung die Gabelscheiden 30 im Bereich ihrer Mitte in Längsrichtung zweiteilig aufweisen, so dass ein fester mit dem Gabelschaft 20 verbundener Abschnitt und ein zweiter mit einer Laufradaufnahme 50 versehenen Abschnitt vorhanden ist, wobei die beiden Abschnitte durch wenigstens ein Dämpfungselement miteinander verbunden sind.

Vorteilhaft ist, dass jeweils die rechten und linken Gabelscheiden U-förmig mit zwei ersten Abschnitten ausgebildet sind, wobei der mit dem Schaftrohr verbundene erste U-förmige Abschnitt den Großteil der oberen Hälfte des Rades umgreift und der zweite mit zwei Laufradaufnahmen am Ende versehene Abschnitt U-förmig wenigstens von der Laufradaufnahme ausgehend den oberen Bereich des Rades umgreift.

Das Dämpfungselement wird mit mehr als der halbe Länge einer Gabelscheide die Verbindung zwischen dem ersten und zweiten Abschnitt bevorzugt herstellen, wobei im Wesentlichen gleich bleibende Dicke zwischen den ersten und zweiten Abschnitten vorgeschlagen wird.

In einer Variante wird das Dämpfungselement unterhalb des mit dem Schaftrohr versehenen Abschnittes angeordnet, alternativ kann das Dämpfungselement oberhalb des mit dem Schaftrohr versehenen Abschnittes angeordnet werden, so dass das Dämpfungselement hinter der Laufradaufnahme endet.

Wenn das Dämpfungselement aus wenigstens zwei Platten besteht, welche sich bei Belastung des Bogens über die Ausfallenden beweglich darstellen, kann bereits eine gute Stossdämpfung erzielt werden.

Bevorzugt wird eine Vielzahl von 20 bis 40 Platten jeweils gelenkig an den ersten und zweiten Abschnitten angesetzt. Als Material wird für das Dämpfungselement ein Faserverbundwerkstoff vorgesehen.

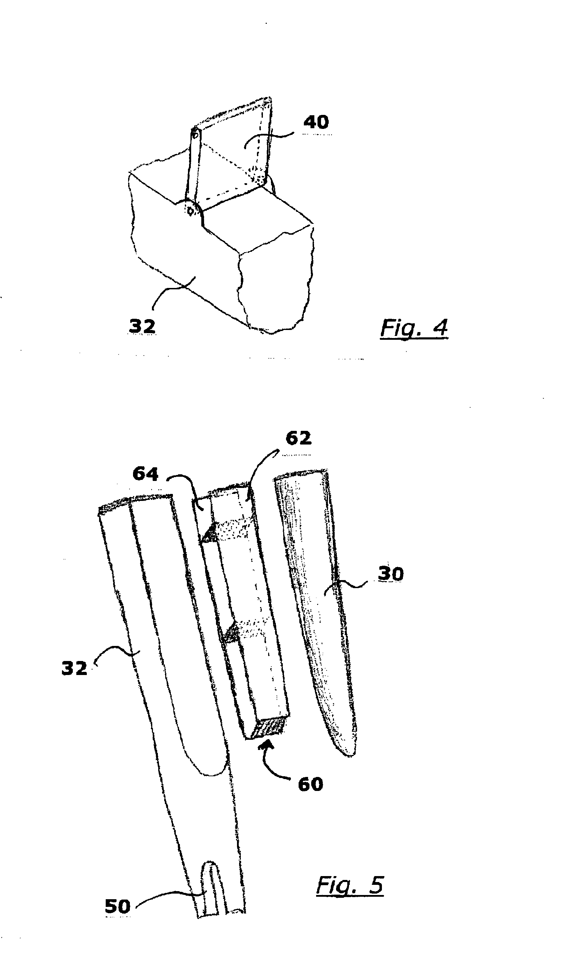

In Fig. 4 ist dann ein Ausschnitt einer Gabelscheide 30, 32 dargestellt an der beispielhaft die Anlenkung einer Platte mit einer Achse dargestellt ist.

In Fig. 5 ist dann nochmals die Aufteilung der Gabelscheiden 30, 32 entlang ihrer Längserstreckung im Bereich ihrer Mitte geteilt aus zwei Abschnitten wie in Fig. 1 und 2 dargestellt, von denen einer 30; 32 fest mit dem Gabelschaft 20 verbunden ist und wenigstens ein zweiter 32; 30 mit jeweils einer Laufradachsenaufnahme 50 für die jeweilige Seite der Radachse versehen ist, wobei die beiden Abschnitte durch eine Mehrzahl von wenigstens drei die Teilung überbrückenden Plattenelementen 40 miteinander verbunden sind, wobei die Platten ohne Gelenke in einer Fachwerkstruktur als ein Bauteil 60 mit entlang der Gabelscheiden 30, 32 sich erstreckenden mit diesen verklebbaren Verbindungsflächen 62, 64 ausgebildet sind.

Vorteilhaft ist dabei, dass wenigstens die unteren Plattenelemente (im Bereich der Erstreckung der Gabelscheiden) in einem Winkel von weniger als 45° zum Querschnitt - also möglichst quer - zur jeweiligen Gabelscheide verlaufen, während zumindest ein oberes Plattenelement 42 im Bereich des Übergangs zum Gabelschaft 20 auch in anderer Ausrichtung vorgesehen sein kann. Bevorzugt wird eine Ausrichtung in einem spitzen Winkel zum Querschnitt, d.h. ein Winkel von 50 - 70° bezogen auf die Längsrichtung der jeweils benachbarten Gabelscheiden.

Eine besonders gute Einfederung ergibt sich, wenn die Plattenelemente 40, 42 zueinander parallel verlaufend angeordnet sind.

Die verkippbare Befestigung der Plattenelemente 40, 42 an den Abschnitten 30, 32 der Gabelscheiden kann auch als eine elastische Verbindung die Plattenelemente 40, 42 biegsam an den Gabelscheiden 30, 32 ausgeführt sein.

Die Plattenelemente 40, 42 sind in einer anderen Alternative durch wenigstens eine Gelenkachse an einer der Gabelscheiden 30, 32 verschwenkbar gegenüber dieser einen Gabelscheide 30; 32 befestigt (Fig. 5). Dabei können an wenigstens einer Gabelscheide Aufnahmen für Gelenkachsen, die in den Platten integriert sind, vorgesehen werden.

Zwischen den Platten elastisch komprimierbare Dämpfungselemente können die Federung mit einer zusätzlichen tieferen Dämpfung versehen. Dabei können pro Gabelscheide mehr als zehn Platten vorgesehen werden, bevorzugt an beiden Gabelscheiden und dem Bereich des Übergangs zum Schaftrohr zwischen 20 und 31 Platten ingesamt.

Da jeweils die beiden rechten und linken Gabelscheiden U-förmig mit einem gemeinsamen ersten Abschnitt ausgebildet werden können, wobei der mit dem Schaftrohr verbundene erste U-fömige Abschnitt den Großteil der oberen Hälfte des Rades umgreift und/oder jeweils die beiden rechten und linken Gabelscheiden U-förmig mit einem gemeinsamen zweiten Abschnitt ausgebildet sind, wobei der zweite mit zwei Laufradaufnahmen an seinem beiden unteren Enden versehene Abschnitt U-förmig wenigstens von der Laufradaufnahme ausgehend den oberen Bereich des Rades umgreift, können die Platten leicht in anderen Ausrichtungen bezüglich der Strasse angeordnet werden.

Dabei wird vorgeschlagen, dass die plattenförmigen Elemente über mehr als die halbe Länge einer Gabelscheide eine Verbindung zwischen dem ersten und zweiten Abschnitt herstellen und mit im wesentlichen gleich bleibenden Dimensionen zwischen den ersten und zweiten Abschnitten vorgesehen sind.

Erfindungsgemäß weist die Fahrradgabel 10 einen Gabelschaft 20 und zwei mit dem Gabelschaft 20 verbundene, die Radachse tragenden Gabelscheiden 30, 32 auf, wobei die Gabelscheiden 30, 32 entlang ihrer Längserstreckung im Bereich ihrer Mitte geteilt aus zwei Abschnitten ausgebildet sind, von denen einer 30; 32 fest mit dem Gabelschaft 20 verbunden ist und wenigstens ein zweiter 32; 30 mit jeweils einer Laufradachsenaufnahme 50 auf jeder Seite der Radachse versehen ist, und wobei die beiden Abschnitte durch eine Mehrzahl von wenigstens drei die Teilung überbrückenden Plattenelementen 40 miteinander verbunden sind.

Die Plattenelemente können dabei bevorzugt ohne Gelenke wie in einer Fachwerkstruktur als ein Bauteil mit entlang der Gabelscheiden sich erstreckenden mit diesen verklebbaren Verbindungsflächen ausgebildet werden. Weiter bevorzugt ist dann jeweils die beiden rechten und linken Gabelscheiden U-förmig mit einem gemeinsamen ersten Abschnitt auszubilden, wobei der mit dem Schaftrohr verbundene erste U-förmige Abschnitt den Großteil der oberen Hälfte des Rades umgreift.

Weiter wird vorgeschlagen jeweils die beiden rechten und linken Gabelscheiden U-förmig mit einem gemeinsamen zweiten Abschnitt auszubilden, wobei der zweite mit zwei Laufradaufnahmen an seinem beiden unteren Enden versehene Abschnitt U-förmig wenigstens von der Laufradaufnahme ausgehend den oberen Bereich des Rades umgreift.

Bevorzugt wird dann, dass die plattenförmigen Elemente über mehr als die halbe Länge einer Gabelscheide eine Verbindung zwischen dem ersten und zweiten Abschnitt herstellen und weiter wird als vorteilhafte Ausführung angesehen, dass die Plattenelemente mit im wesentlichen gleich bleibenden Dimensionen zwischen den ersten und zweiten Abschnitten vorgesehen sind.

Die plattenförmigen Elemente werden dann unterhalb oder alternativ oberhalb des mit dem Schaftrohr versehenen Abschnittes angeordnet sein, und/oder weitere Dämpfungselemente zwischen wenigstens zwei Platten vorgesehen, welche sich bei Belastung der Platten elastisch verformen. Als Dämpfungswerkstoff wird ein Faserverbundwerkstoff vorgesehen.

## Patentansprüche

1. Fahrradgabel (10) mit einem Gabelschaft (20) und zwei mit dem Gabelschaft (20) verbundenen, die Radachse tragenden Gabelscheiden (30, 32),
**dadurch gekennzeichnet, dass**
die Gabelscheiden (30, 32) entlang ihrer Längserstreckung im Bereich ihrer Mitte geteilt aus zwei Abschnitten ausgebildet sind, von denen einer (30; 32) fest mit dem Gabelschaft (20) verbunden ist und wenigstens ein zweiter (32; 30) mit jeweils einer Laufradachsenaufnahme (50) auf jeder Seite der Radachse versehen ist,
wobei die beiden Abschnitte durch eine Mehrzahl von wenigstens drei die Teilung überbrückenden Plattenelementen (40) miteinander verbunden sind.

2. Fahrradgabel nach Anspruch 1, **dadurch gekennzeichnet, dass** die unteren Plattenelemente in einem Winkel von 45° bis 90° zur Längsrichtung der jeweiligen Gabelscheide verlaufen, und zumindest ein oberes Plattenelement (42) im Bereich des Übergangs zum Gabelschaft (20) vorgesehen ist.

3. Fahrradgabel nach einem der vorangehenden Ansprüche, **dadurch gekennzeichnet, dass** die Plattenelemente (40, 42) zueinander parallel verlaufend angeordnet sind.

4. Fahrradgabel nach einem der vorangehenden Ansprüche, **dadurch gekennzeichnet, dass** die Plattenelemente (40, 42) verkippbar an die Abschnitte (30, 32) der Gabelscheiden angesetzt sind.

5. Fahrradgabel nach einem der vorangehenden Ansprüche, **dadurch gekennzeichnet, dass** über eine elastische Verbindung die Plattenelemente (40, 42) biegsam an den Gabelscheiden (30, 32) befestigt sind.

6. Fahrradgabel nach einem der vorangehenden Ansprüche, **dadurch gekennzeichnet, dass** die Plattenelemente (40, 42) durch wenigstens eine Gelenkachse an einer der Gabelscheiden (30, 32) verschwenkbar gegenüber dieser einen Gabelscheide (30; 32) befestigt sind.

7. Fahrradgabel nach einem der vorangehenden Ansprüche, **dadurch gekennzeichnet, dass** an wenigstens einer Gabelscheide Aufnahmen für Gelenkachsen, die in den Platten integriert sind, vorgesehen sind.

8. Fahrradgabel nach einem der vorangehenden Ansprüche, **dadurch gekennzeichnet, dass** zwischen den Platten elastisch komprimierbare Dämpfungselemente vorgesehen sind.

9. Fahrradgabel nach einem der vorangehenden Ansprüche, **dadurch gekennzeichnet, dass** die Platten ohne Gelenke in einer Fachwerkstruktur als ein Bauteil mit entlang der Gabelscheiden sich erstreckenden mit diesen verklebbaren Verbindungsflächen ausgebildet sind.

10. Fahrradgabel nach einem der vorangehenden Ansprüche, **dadurch gekennzeichnet, dass** jeweils die beiden rechten und linken Gabelscheiden U-förmig mit einem gemeinsamen ersten Abschnitt ausgebildet sind, wobei der mit dem Schaftrohr verbundene erste U-förmige Abschnitt den Großteil der oberen Hälfte des Rades umgreift.

11. Fahrradgabel nach einem der vorangehenden Ansprüche, **dadurch gekennzeichnet**, jeweils die beiden rechten und linken Gabelscheiden U-förmig mit einem gemeinsamen zweiten Abschnitt ausgebildet sind, wobei der zweite mit zwei Laufradaufnahmen an seinem beiden unteren Enden versehene Abschnitt U-förmig wenigstens von der Laufradaufnahme ausgehend den oberen Bereich des Rades umgreift.

12. Fahrradgabel nach einem der vorangehenden Ansprüche, **dadurch gekennzeichnet, dass** das die plattenförmigen Elemente über mehr als die halbe Länge einer Gabelscheide eine Verbindung zwischen dem ersten und zweiten Abschnitt herstellen.

13. Fahrradgabel nach einem der vorangehenden Ansprüche, **dadurch gekennzeichnet, dass** die plattenförmigen Elemente unterhalb des mit dem Schaftrohr versehenen Abschnittes angeordnet ist.

14. Fahrradgabel nach einem der vorangehenden Ansprüche, **dadurch gekennzeichnet, dass** weitere Dämpfungselemente zwischen wenigstens zwei Platten vorgesehen sind, welche sich bei Belastung der Platten elastisch verformen.

15. Fahrradgabel nach einem der vorangehenden Ansprüche, **dadurch gekennzeichnet, dass** als Dämpfung ein Faserverbundwerkstoff vorgesehen ist.
